# EUROPÄISCHE PATENTSCHRIFT

(11) **EP 1 018 051 B1**
(45) Veröffentlichungstag und Bekanntmachung des Hinweises auf die Patenterteilung: **05.03.2003**
(21) Anmeldenummer: 98948817.6
(22) Anmeldetag: 21.08.1998
(51) Int. Cl.: G02B 6/42

(54) **VERFAHREN ZUM HERSTELLEN EINES OPTOELEKTRONISCHEN STECKERAUFNAHMEELEMENTES UND OPTOELEKTRONISCHER STECKER**
METHOD FOR PRODUCING AN OPTOELECTRONIC PLUG CONNECTOR ELEMENT AND OPTOELECTRONIC PLUG
PROCEDE DE PRODUCTION D'UN ELEMENT DE LOGEMENT DE FICHE OPTO-ELECTRONIQUE ET FICHE OPTO-ELECTRONIQUE

(30) Priorität: 26.09.1997 DE 19743992
(43) Veröffentlichungstag der Anmeldung: 12.07.2000
(73) Patentinhaber: Infineon Technologies AG, 81669 München (DE)
(72) Erfinder: KROPP, Jörg-Reinhardt, D-12355 Berlin (DE)
(74) Vertreter: Müller, Wolfram Hubertus, Dr. Dipl.-Phys.
(86) Internationale Anmeldenummer: DE9802456
(87) Internationale Veröffentlichungsnummer: WO99017141

(56) Entgegenhaltungen:
- EP-A- 0 458 608
- EP-A- 0 522 417
- EP-A- 0 573 941
- PATENT ABSTRACTS OF JAPAN vol. 007, no. 216 (P-225), 24. September 1983 & JP 58 111008 A (TOKYO SHIBAURA DENKI KK), 1. Juli 1983
- PATENT ABSTRACTS OF JAPAN vol. 096, no. 008, 30. August 1996 & JP 08 110434 A (HITACHI CABLE LTD), 30. April 1996

## Beschreibung

Aus der US-Patentschrift 5,367 593 ist ein Verfahren zum Herstellen eines optoelektronischen Steckeraufnahmeelementes für einen optischen Stecker eines optoelektronischen Steckverbinders bekannt, bei dem zum Herstellen des Steckeraufnahmeelementes ein Montageblock mit Ausrichtöffnungen und Enden von Nuten an der steckerzugewandten Stirnseite verwendet wird. Die Nuten sind in einer Lichtleiterenden des optischen Steckers entsprechenden Anordnung vorgesehen und erstrecken sich bis zu einer Grube in dem Montageblock. In der Grube befindet sich ein Bauteileträger mit einer integrierten Schaltung und einem optoelektronischen Bauteil; beim Einfügen dieser Anordnung in die Grube des Montageblocks erfolgt eine Ausrichtung optischer Wandlerelemente des optoelektronischen Bauteils zu den inneren Enden der Nuten, die nach Auffüllen mit einem geeigneten Kunststoff Lichtwellenleiter bilden.

Der Erfindung liegt die Aufgabe zugrunde, ein Verfahren zum Herstellen eines optoelektronischen Steckeraufnahmeelements für einen optischen Stecker eines optoelektronischen Steckverbinders vorzuschlagen, das sich mit vergleichsweisen geringem Aufwand unter Erzielung einer optimalen Kopplung zwischen den optoelektronischen Wandlerelementen des Steckeraufnahmeelementes und den optischen Bauelementen des Steckers durchführen läßt.

Zur Lösung dieser Aufgabe wird bei einem Verfahren zum Herstellen eines optoelektronischen Steckeraufnahmeelements für einen optischen Stecker eines optoelektronischen Steckverbinders verwendet, bei dem ein Montageblock mit Ausrichtstiften in einer solchen Anordnung versehen wird, daß die Ausrichtstifte aus einer steckerzugewandten Stirnseite des Montageblocks hervorstehen, ein Bauteileträger mit einem optoelektronischen Bauteil auf dieser Stirnseite des Montagebausteins aufgebracht, der Montageblock unter Einführen der Ausrichtstifte in Ausrichtöffnungen des optischen Steckers gegen die Kontaktseite des optischen Steckers geführt, optoelektronische Wandlerelemente des optoelektronischen Bauteils elektrisch angesteuert werden und der Bauteileträger auf der steckerzugewandten Stirnseite in eine Position mit einer maximalen optischen Kopplung mit den Lichtleitern des optischen Steckers gebracht, der Bauteileträger in der Position maximaler Kopplung auf der steckerzugewandten Stirnseite fixiert wird und der Montageblock mit Kunststoff umgossen wird.

Ein wesentlicher Vorteil des erfindungsgemäßen Verfahrens besteht in seiner vergleichsweise einfachen Durchführbarkeit. Diese ist darin begründet, daß der Bauteileträger mit dem optoelektronischen Bauteil auf der steckerzugewandten Stirnseite des Montageblocks aufgebracht wird, so daß eine Grube im Montageblock nicht erforderlich ist und auch Nuten in diesem Block nicht benötigt werden; der Montageblock ist beim erfindungsgemäßen Verfahren im wesentlichen ein Quader. Ein weiterer wichtiger Vorteil besteht darin, daß sich ein Steckverbinder mit besonders guter optischer Kopplung gewinnen läßt, weil der Bauteileträger des Steckeraufnahmeelementes während des Herstellungsverfahrens in bezug auf den Stecker so auf dem Montageblock plaziert wird, daß eine Position maximaler optischer Kopplung zwischen den optoelektronischen Wandlerelementen der Stecker und den optischen Bauteilen des Steckers erreicht wird. Erst wenn der Bauteileträger diese Lage auf dem Montageblock erreicht hat, wird das erfindungsgemäße Herstellungsverfahren fortgesetzt und abgeschlossen, so daß auf diese Weise ein optoelektronischer Steckverbinder gewinnbar ist, der in bezug auf die optische Kopplung und die mechanische Zusammenfügbarkeit optimal ausgelegt ist.

Bei der Durchführung des erfindungsgemäßen Verfahrens wird der Bauteileträger mit einer inneren Öffnung auf die Stifte aufgeschoben. Dadurch wird der Bauteileträger vorpositioniert und auch die Abwicklung des Herstellungsprozesses erleichtert.

Bei der Durchführung des erfindungsgemäßen Verfahrens wird der Montageblock vorteilhafterweise unter Einhaltung eines vorgegebenen Abstandes gegen die Kontaktseite des optischen Steckers geführt, um den Bauteileträger auf dem Montageblock verschiebbar halten und in bezug auf die optoelektronischen Wandlerelemente des Steckeraufnahmeelementes optisch optimal ausrichten zu können. Der vorgegebene Abstand kann in vorteilhafter Weise durch Verwendung entsprechend bemessener Abstandstücke oder durch Abstandselemente am Bauteileträger erreicht werden.

Das Fixieren des Bauteileträgers auf dem Montageblock in der Lage optimaler optischer Kopplung erfolgt vorteilhafterweise durch Kleben, Löten oder Schweißen. Als Klebstoff kann dabei vorteilhafterweise ein lichtaushärtender Klebstoff verwendet werden.

Bei einer vorteilhaften Ausführungsform des erfindungsgemäßen Verfahrens wird der Montageblock zumindest im Bereich des Bauteileträgers mit einem transparenten Kunststoff umgossen, wodurch eine äußere Umhüllung entsteht, die einerseits einen Schutz vor Umwelteinflüssen gewährleistet und andererseits das Licht von den eingebetteten optoelektronischen Wandlerelementen auf dem Bauteileträger zu den optischen Bauteilen des Steckers im zusammengefügten Zustand gelangen läßt.

Bei dem Umgießen des Montageblocks wird dieser vorteilhafterweise mit dem Kunststoff in einer Gießform umgossen, deren Innenkontur der Außenkontur des Steckers entspricht. Auf diese Weise können beispielsweise ohne Schwierigkeiten Ausnehmungen vorgesehen werden, in die Sperrklinken einer Rasteinrichtung des Steckers im zusammengefügten Zustand eingreifen können.

Die Erfindung betrifft ferner einen optoelektronischen Steckverbinder mit einem optischen Stecker, der an seiner Kontaktseite nebeneinanderliegend Enden von Lichtleitern sowie Ausrichtelemente aufweist, und mit einem optoelektronischen Steckeraufnahmeelement, das an seiner Kontaktseite mit den Ausrichtelementen zusammenwirkende Ausrichtteile besitzt und mit den Lichtaufnahmeelementen seines optoelektrischen Bauteils so ausgerichtet in dem Steckeraufnahmeelement angeordnet ist, daß aus den Enden der Lichtleiter austretendes Licht auf die Lichtaufnahmeelemente fällt.

Ein solcher Steckverbinder ist in der europäischen Patentanmeldung EP 0 699 932 A1 beschrieben. Bei diesem bekannten Steckverbinder weist ein optoelektronisches Steckeraufnahmeelement einen Montageblock auf, der an seiner steckerzugewandten Stirnseite einen Bauteileträger mit optoelektronischen Wandlerelementen trägt; der Bauteileträger ist mit dem Montageblock auf einer Leiterplatte aufgebracht. Der Montageblock weist seitliche Vertiefungen zur Aufnahme von klauenartigen Ansätzen an einen optischen Stecker auf.

Um ein einfach aufgebautes Steckeraufnahmeelement eines optischen Steckverbinders unter Gewährleistung einer besonders guten optischen Kopplung zu schaffen, sind erfindungsgemäß die Ausrichtteile als Stifte in einem Montageblock des Steckeraufnahmeelementes gehalten, der Montageblock trägt an seiner der Kontaktseite des Steckeraufnahmeelementes zugewandten Seite einen die Stifte umfassenden Bauteileträger mit dem optoelektronischen Bauteil und der Montageblock ist mit dem Bauteileträger und dem optoelektronischen Bauteil mit transparentem Kunststoff umgossen.

Bei einer vorteilhaften Ausführungsform des erfindungsgemäßen Steckeraufnahmeelementes ist der Kunststoff transparent und weist eine hohe optische Transmission in dem Spektralbereich auf, in dem das aus den Enden der Lichtleiter austretende Licht liegt; er ist damit vor Umwelteinflüssen geschützt.

Zur weiteren Erläuterung ist in
- Figur 1: ein Schnitt durch ein Ausführungsbeispiel eines nach dem erfindungsgemäßen Verfahren hergestellten elektrooptischen Steckers, in
- Figur 2: ein Ausführungsbeispiel eines zu dem Stecker gemäß Figur 1 passenden Steckeraufnahmeelementes, in
- Figur 3: ein weiterer Schnitt durch das Ausführungsbeispiel nach Figur 1 gemäß der Linie III - III und in
- Figur 4: eine Draufsicht auf dasselbe Ausführungsbeispiel des elektrooptischen Steckers dargestellt.

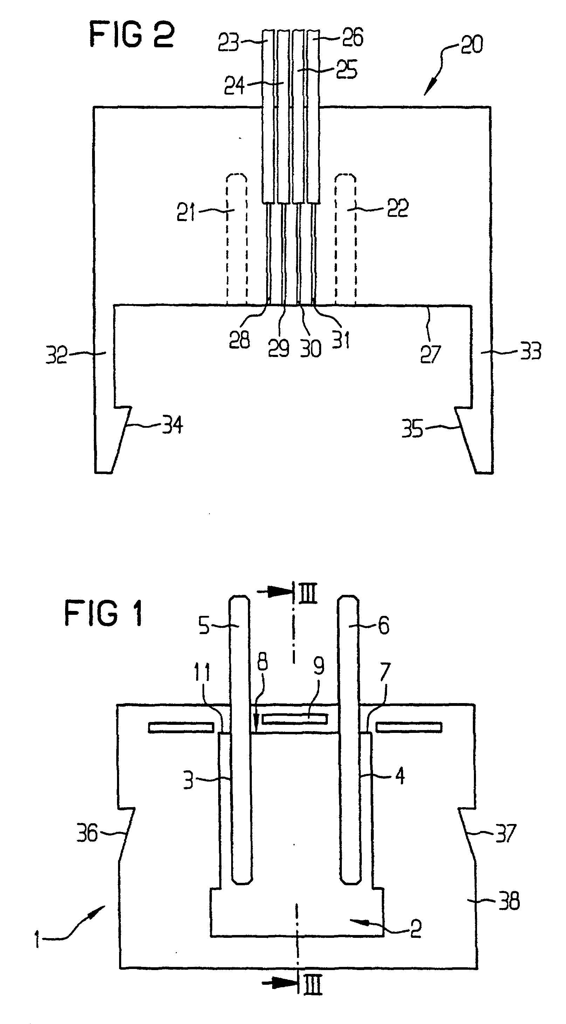

Das in den Figuren 1, 3 und 4 dargestellte optoelektronische Steckeraufnahmeelement 1 enthält einen Montageblock 2, der mit Sacklöchern 3 und 4 zur Aufnahme von Ausrichtteilen in Form von Stiften 5 und 6 versehen ist. Auf einer steckerzugewandten Stirnseite 7 des Montageblocks 2 ist ein Bauteileträger 8 aufgebracht, der beispielsweise in Form einer gedruckten Leiterplatte oder eines sogenannten lead frame ausgebildet ist. Auf dem Bauteileträger 8 befindet sich beispielsweise ein optoelektronisches Bauteil 9 mit optoelektronischen Wandlerelementen 9a, wie zum Beispiel VCSEL-Elementen oder Photodioden.

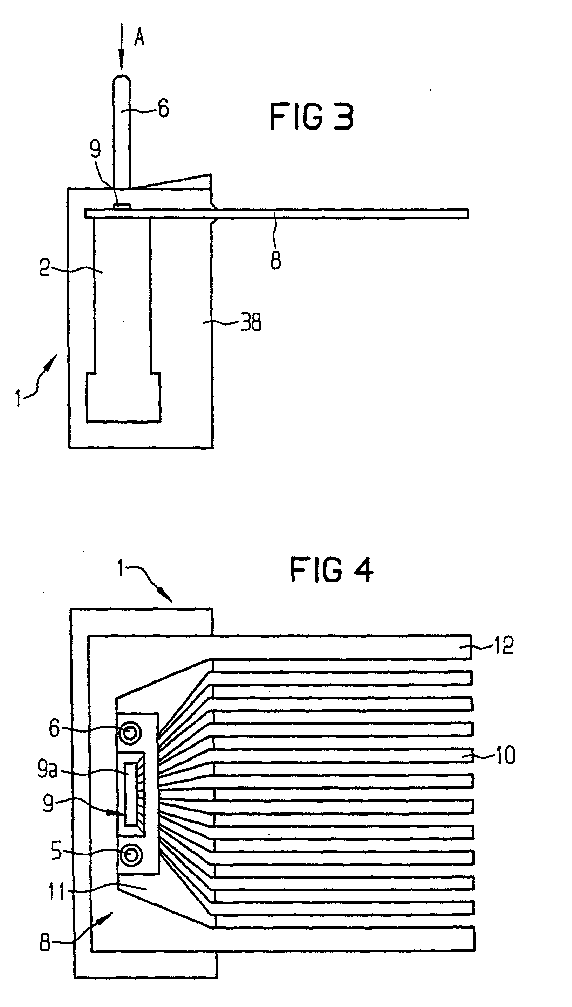

Wie insbesondere Figur 4 erkennen läßt, sind auf dem Bauteileträger 8 außer den Wandlerelementen 9a auch Leiterbahnen 10 vorhanden, die zu äußeren, nicht dargestellten Anschlüssen des optoelektronischen Steckeraufnahmeelementes 1 führen. Die Leiterbahnen 10 sind mit den Wandlerelementen 9 über Bonddrähte 11 verbunden, wie ebenfalls die Figur 4 deutlich erkennen läßt. Die Figur 4 zeigt ferner, daß der Bauteileträger 8 im Bereich der Stifte 5 und 6 mit einer relativ großen inneren Öffnung 11 versehen ist. Der Bauteileträger 8 weist außerdem einen äußeren Rahmen 12 auf.

Das Steckeraufnahmeelement 1 nach den Figuren 1, 3 und 4 soll mit einem optischen Stecker 20 zu einem optoelektronischen Steckverbinder zusammenfügbar sein. Der in Figur 2 dargestellte Stecker 20 weist in seinem Innern Führungselemente auf, die im Hinblick auf die Ausgestaltung der Ausrichtteile als Ausrichtstifte 5 und 6 als Ausrichtöffnungen 21 und 22 zur Aufnahme der freien Enden der Ausrichtstifte 5 und 6 ausgebildet sind. Der Stecker 20 enthält ferner als optische Bauteile Lichtwellenleiter 23, 24, 25 und 26, die an einer inneren Kontaktseite 27 des Steckers 20 an Abschlüssen 28, 29, 30 und 31 enden. Im Hinblick auf die Anordnung der Abschlüsse 28 bis 31 der Lichtleiter 23 bis 26 des Steckers 20 sind die Wandlerelemente 9 auf dem Bauteileträger 8 räumlich angeordnet.

Der Stecker 20 ist an einander gegenüberliegenden Zungen 32 und 33 mit Sperrklinken 34 und 35 versehen, die beim Verbinden des Steckers 20 mit dem Steckeraufnahmeelement 1 in Rastvertiefungen 36 und 37 eines Kunststoffumgusses 38 des Montageblocks 2 des Steckeraufnahmeelementes 1 (vgl. Fig. 1) eingreifen und damit den Stecker 20 fest an dem Steckeraufnahmeelement 1 halten.

Bei der Herstellung des in den Figuren 1, 3 und 4 dargestellten Steckeraufnahmeelementes 1 wird in der Weise vorgegangen, daß zunächst der Montageblock 2 mit den Sacklöchern 3 und 4 in einer räumlichen Anordnung versehen wird, wie sie durch die Führungselemente 21 und 22 des Steckers 20 vorgegeben ist. Danach werden die Ausrichtstifte 5 und 6 in die Sacklöcher 3 und 4 eingebracht. Anschließend wird von der in der Figur 1 oberen Seite her der Bauteileträger 8 über die Stifte 5 und 6 mit seiner Öffnung 11 (siehe insbesondere Fig. 4) aufgeschoben und auf die Stirnseite 7 des Montageblocks 2 aufgelegt. Anschließend wird der Stecker 20 auf den Montageblock 2 in der Weise aufgeschoben, daß seine Ausrichtöffnungen 21 und 22 die Ausrichtstifte 5 und 6 aufnehmen; unter Einhaltung eines Abstandes zwischen der steckerzugewandten Stirnseite 7 des Montageblocks 2 und der Stirnseite 27 des Steckers 20 werden der Stecker 20 und der Montageblock aneinandergedrückt, und es wird in diesem Zustand eine Ausrichtung des Bauteileträgers 8 bezüglich des Steckers 20 in der Weise vorgenommen, daß bei elektrischer Ansteuerung der Wandlerelemente 9a über die Leiterbahnen 10 des Bauteileträgers 8 und unter Beobachtung der optischen Signale an den in der Figur 2 nicht dargestellten äußeren Enden der Lichtwellenleiter 23 bis 26 eine maximale optische Kopplung erzielt wird. In der Lage der maximalen optischen Kopplung wird der Bauteileträger 8 an der steckerzugewandten Stirnseite 7 des Montagebausteins 2 beispielsweise durch Einbringen eines lichtaushärtenden Klebstoffs von der Seite her fixiert und danach der Stecker 20 vom Montageblock 2 entfernt.

Anschließend wird der Montageblock in einer nicht dargestellten Gießform mit einer Innenkontur, die der Innenkontur des Steckers 20 im Bereich der Stirnseite 27 entspricht, mit einem transparenten Kunststoffumguß 38 versehen. Der Kunststoffumguß wird mit transparentem Kunststoff vorgenommen, der seine maximale Transmission vorteilhafterweise in dem Spektralbereich hat, in dem später Signale über das optoelektronische Steckeraufnahmeelement 1 übermittelt werden. Bei diesem Umguß werden auch die Rastvertiefungen 36 und 37 ausgebildet. Die Wandlerelemente 9a des Steckeraufnahmeelementes 1 sind damit gegen äußere Umwelteinflüsse optimal geschützt, und es ist eine optimale optische Kopplung bei einem späteren Zusammenbau von Stecker und Steckeraufnahmeelement zu einer optischen Steckverbindung erreicht.

## Patentansprüche

1. Verfahren zum Herstellen eines optoelektronischen Steckeraufnahmeelement (1) für einen optischen Stecker (20) eines optoelektronischen Steckverbinders, bei dem
- ein Montageblock (2) mit Ausrichtstiften (5, 6) in einer solchen Anordnung versehen wird, daß die Ausrichtstifte (5, 6) aus einer steckerzugewandten Stirnseite (7) des Montageblocks (2) hervorstehen,
- ein Bauteileträger (8) mit einem optoelektronischen Bauteil auf dieser Stirnseite (7) des Montagebausteins (2) aufgebracht wird,
- der Montageblock (2) unter Einführen der Ausrichtstifte (5, 6) in Ausrichtöffnungen (21, 22) des optischen Steckers (20) gegen die Kontaktseite (27) des optischen Steckers (20) geführt wird,
- optoelektronische Wandlerelemente (9a) des optoelektronischen Bauteils (9) elektrisch angesteuert werden und der Bauteileträger (8) auf der steckerzugewandten Stirnseite (7) in eine Position mit einer maximalen optischen Kopplung mit Lichtleitern (23 bis 26) des optischen Steckers (20) gebracht wird,
- der Bauteileträger (8) in der Position maximaler Kopplung auf der steckerzugewandten Stirnseite (7) fixiert wird und
- der Montageblock (2) mit Kunststoff (38) umgossen wird.

2. Verfahren nach Anspruch 1,
**dadurch gekennzeichnet, daß**
- der Bauteileträger (8) mit einer inneren Öffnung auf die Ausrichtstifte (5, 6) aufgeschoben wird.

3. Verfahren nach Anspruch 1 oder 2,
**dadurch gekennzeichnet, daß**
- der Montageblock (2) unter Einhaltung eines vorgegebenen Abstandes gegen die Kontaktseite (27) des optischen Steckers (20) geführt wird.

4. Verfahren nach Anspruch 3,
**dadurch gekennzeichnet, daß**
- ein Bauteileträger mit Abstandselementen zur Einhaltung des vorgegebenen Abstandes verwendet wird.

5. Verfahren nach Anspruch 3,
**dadurch gekennzeichnet, daß**
- zwischen dem Montageblock und dem Stecker Abstandsstücke eingebracht werden.

6. Verfahren nach einem der vorangehenden Ansprüche,
**dadurch gekennzeichnet, daß**
- der Bauteileträger (8) durch Kleben, Löten oder Schweißen fixiert wird.

7. Verfahren nach einem der vorangehenden Ansprüche,
**dadurch gekennzeichnet, daß**
- der Montageblock (2) zumindest im Bereich des Bauteileträgers (8) mit einem transparenten Kunststoff (38) umgossen wird.

8. Verfahren nach einem der vorangehenden Ansprüche,
**dadurch gekennzeichnet, daß**
- der Montageblock (2) mit dem Kunststoff (38) in einer Gießform umgossen wird, deren Innenkontur der Innenkontur des optischen Steckers (20) angepaßt ist.

9. Optoelektronischer Steckverbinder mit einem
- optischen Stecker (20), der an seiner Kontaktseite (27) nebeneinanderliegend Enden (28 bis 31) von Lichtleitern (23 bis 26) sowie Ausrichtelemente (21, 22) aufweist, und mit einem
- optoelektronischen Steckeraufnahmeelement (1), das an seiner Kontaktseite mit den Ausrichtelementen (21, 22) zusammenwirkende Ausrichtteile (5, 6) besitzt und mit optischen Wandlerelementen (9a) seines optoelektrischen Bauteils (9) so ausgerichtet in dem Stecker (20) angeordnet ist, daß aus den Enden (28 bis 31) der Lichtleiter (23 bis 26) austretendes Licht auf die optischen Wandlerelemente (9a) fällt,
**dadurch gekennzeichnet, daß**
- die Ausrichtteile als Ausrichtstifte (5, 6) in einem Montageblock (2) des Steckeraufnahmeelementes (1) gehalten sind,
- der Montageblock (2) an seiner der Kontaktseite (2) des Steckers (20) zugewandten Seite einen die Ausrichtstifte (5, 6) umfassenden Bauteileträger (8) mit dem optoelektronischen Bauteil (9) trägt und
- der Montageblock (2) mit dem Bauteileträger (8) und dem optoelektronischen Bauteil (9) mit transparentem Kunststoff (38) umgossen ist.

10. Stecker nach Anspruch 9,
**dadurch gekennzeichnet, daß**
- der Kunststoff transparent ist und eine hohe optische Transmission in dem Spektralbereich aufweist, in dem das aus den Enden (28 bis 31) der Lichtleiter (23 bis 26) austretende Licht liegt.

## Claims

1. Method for production of an optoelectronic female connector element (1) for an optical male connector (20) of an optoelectronic plug connector, in which
- a mounting block (2) having alignment pins (5, 6) is provided in an arrangement such that the alignment pins (5, 6) project out of an end face (7) of the mounting block (2) facing the male connector,
- a component support (8) having an optoelectronic component is fitted to this end face (7) of the mounting module (2),
- the mounting block (2) is guided with respect to the contact face (27) of the optical male connector (20), with the alignment pins (5, 6) being inserted into alignment openings (21, 22) in the optical male connector (20),
- optoelectronic transducer elements (9a) of the optoelectronic component (9) are electrically actuated, and the component support (8) on the end face (7) facing the male connector is moved to a position with maximum optical coupling to optical conductors (23 to 26) in the optical male connector (20),
- the component support (8) is fixed in the position of maximum coupling on the end face (7) facing the male connector, and
- the mounting block (2) is encapsulated with plastic (38).

2. Method according to Claim 1,
**characterized in that**
- an inner opening in the component support (8) is pushed onto the alignment pins (5, 6).

3. Method according to Claim 1 or 2,
**characterized in that**
- the mounting block (2) is guided with respect to the contact face (27) of the optical male connector (20), while maintaining a predetermined separation.

4. Method according to Claim 3,
**characterized in that**
- a component support is used having spacing elements in order to maintain the predetermined separation.

5. Method according to Claim 3,
**characterized in that**
- spacing pieces are fitted between the mounting block and the male connector.

6. Method according to one of the preceding claims,
**characterized in that**
- the component support (8) is fixed by bonding, soldering or welding.

7. Method according to one of the preceding claims,
**characterized in that**
- the mounting block (2) is encapsulated with a transparent plastic (38), at least in the region of the component support (8).

8. Method according to one of the preceding claims,
**characterized in that**
- the mounting block (2) is encapsulated with the plastic (38) in a mould whose internal contour is matched to the internal contour of the optical male connector (20).

9. Optoelectronic plug connector having an
- optical male connector (20) which, on its contact face (27), has ends (28 to 31) of optical conductors (23 to 26) as well as alignment elements (21, 22) located side by side, and having an
- optoelectronic female connector element (1) which, on its contact face, has alignment parts (5, 6) which interact with the alignment elements (21, 22) and is arranged in the male connector (20) aligned with optical transducer elements (9a) of its optoelectronic component (9), such that the light which emerges from the ends (28 to 31) of the optical conductors (23 to 26) falls on the optical transducer elements (9a),
**characterized in that**
- the alignment parts are held as alignment pins (5, 6) in a mounting block (2) in the female connector element (1),
- on its side facing the contact face (2) of the male connector (20), the mounting block (2) is fitted with a component support (8) which surrounds the alignment pins (5, 6) and is fitted with the optoelectronic component (9), and
- the mounting block (2), together with the component support (8) and the optoelectronic. component (9), are encapsulated with transparent plastic (38).

10. Male connector according to Claim 9,
**characterized in that**
- the plastic is transparent and has high optical transmission in the spectral band of the light which emerges from the ends (28 to 31) of the optical conductors (23 to 26).

## Revendications

1. Procédé de production d'un élément de logement de fiche optoélectronique (1) pour un connecteur optique (20) d'une fiche optoélectronique avec lequel
- un bloc de montage (2) est muni de broches d'alignement (5, 6) disposées de manière à ce qu'elles dépassent d'un côté frontal (7) du bloc de montage dirigé vers le connecteur,
- un support de composants (8) comprenant un composant optoélectronique est placé sur ce côté frontal (7) du bloc de montage (2),
- le bloc de montage (2) est amené contre le côté de contact (27) du connecteur optique 20, les broches d'alignement (5, 6) étant introduites dans les ouvertures d'alignement (21, 22) du connecteur optique 20,
- des éléments de convertisseur optoélectroniques (9a) du composant optoélectronique (9) font l'objet d'une commande électrique et le support de composants (8) se trouvant sur le côté frontal (7) dirigé vers le connecteur est amené dans une position de couplage optique maximum avec des fibres optiques (23 à 26) du connecteur optique 20,
- le support de composants (8) est fixé sur le côté frontal (7) dirigé vers le connecteur dans la position de couplage maximum et
- le bloc de montage (2) est enrobé de matériau synthétique (38).

2. Procédé selon la revendication 1, **caractérisé en ce que** le support de composants (8) est enfilé sur les broches d'alignement (5, 6) par une ouverture intérieure.

3. Procédé selon la revendication 1 ou 2, **caractérisé en ce que** le bloc de montage (2) est amené contre le côté de contact (27) du connecteur optique 20, un espacement imposé étant ménagé.

4. Procédé selon la revendication 3, **caractérisé en ce qu'**un support de composants comprenant des éléments d'écartement est utilisé pour maintenir l'espacement imposé.

5. Procédé selon la revendication 3, **caractérisé en ce que** des entretoises sont placées entre le bloc de montage et le connecteur.

6. Procédé selon l'une des revendications précédentes, **caractérisé en ce que** le support de composants (8) est fixé par collage, par brasage ou par soudage.

7. Procédé selon l'une des revendications précédentes, **caractérisé en ce qu'**au moins dans la zone du support de composant (8) le bloc de montage (2) est enrobé de matériau synthétique transparent (38).

8. Procédé selon l'une des revendications précédentes, **caractérisé en ce que** le bloc de montage (2) est enrobé de matériau synthétique (38) dans un moule de coulée, dont le contour intérieur est adapté au contour intérieur du connecteur optique 20.

9. Fiche optoélectronique avec
- un connecteur optique 20, qui est muni sur son côté de contact (27) d'extrémités (28 à 31) de fibres optiques (23 à 26) placées les unes à côté des autres ainsi que d'éléments d'alignement (21, 22) et avec
- un élément de logement de fiche optoélectronique (1), qui comprend sur son côté de contact des pièces d'alignement (5, 6) agissant de concert avec les éléments d'alignement (21, 22), et qui est disposé dans le connecteur optique 20 avec un alignement tel avec des éléments optiques de convertisseur (9a) de son composant optoélectronique (9) que de la lumière sortant des extrémités (28 à 31) des fibres optiques (23 à 26) arrive sur les éléments optiques de convertisseur (9a),
**caractérisée**
- **en ce qu'**en tant que broches d'alignement (5, 6) les pièces d'alignement sont maintenues dans un bloc de montage (2) de l'élément de logement de fiche 1,
- **en ce qu'**à son côté dirigé vers le côté de contact (27) du connecteur optique 20, le bloc de montage (2) porte un support de composants (8) avec le composant optoélectronique (9) et comportant les broches d'alignement (5, 6) et
- **en ce que** le bloc de montage (2) comprenant le support de composants (8) et le composant optoélectronique (9) est enrobé de matériau synthétique transparent (38).

10. Fiche selon la revendication 9, **caractérisée en ce que** le matériau synthétique est transparent et dispose, dans la zone spectrale de la lumière sortant des extrémités (28 à 31) des fibres optiques (23 à 26), de caractéristiques de transmission optique de haut niveau.
